# EUROPEAN PATENT APPLICATION

(11) **EP 3 287 635 A1**
(43) Date of publication of application: **28.02.2018**
(21) Application number: 16185321.3
(22) Date of filing: 23.08.2016
(51) Int. Cl.: F03D 7/02, F03D 13/20

(54) **WIND TURBINE WITH A HORIZONTAL PIVOT AXIS, TOWER FOR SUCH A WIND TURBINE AND METHOD FOR INSTALLING AND OPERATING SUCH A WIND TURBINE**

(71) Applicant: Polygon Windmill ApS, 4593 Eskebjerg (DK)
(72) Inventor: Eilskov Svarrer, Peter, 29650 Mijas - Malaga (ES)
(74) Representative: Rottenberg, Annabell Simone

(57) **Abstract**

The invention relates to a wind turbine with a rotor for driving an electrical generator for generating electrical power in response to a wind force exposed to the rotor, the wind turbine comprising. A tower is mounted to a tower support. The tower capable of performing a pivotal displacement, in relation to the tower support, around a horizontal pivot axis. The rotor is positioned at a first part of the tower. The rotor is capable of rotation, in relation to the tower, around a hub, when the rotor is exposed to the wind force. The pivotal displacement of the tower being between an upright position of the rotor and a lie-down position of the rotor, in relation to a direction of the wind force. A load is mounted to the tower. The load is capable of controlling the pivotal displacement of the tower in relation to the tower support, and the load is capable of being adjusted so that the load is varied depending on operating parameters at the site of the wind turbine and/or depending on any selected parameters of the wind turbine.

## Description

### Field of the invention

The invention relates to a wind turbine with a rotor for driving an electrical generator for generating electrical power in response to a wind force exposed to the rotor, the wind turbine comprising: a tower mounted to a tower support, the tower capable of performing a pivotal displacement in relation to the tower support, around a horizontal pivot axis, the rotor being positioned at a first part of the tower, the rotor capable of rotation in relation to the tower, around a hub, when the rotor is exposed to the wind force, the pivotal displacement of the tower being between an upright position of the rotor and a lie-down position of the rotor, in relation to a direction of the wind force.

The invention also relates to a tower for such a wind turbine and to a method for installing and operating such a wind turbine.

Various prior art wind turbines are known of the type, where the tower is capable of pivoting around a horizontal axis. None of the prior art wind turbines takes into consideration possible varying wind conditions at various sites of installation.

### Summary of the invention

The object of the invention is to provide a wind turbine with a tower which is capable of pivoting around a horizontal axis from an upright position of the rotor, in relation to the wind direction, to a lie-down position of the rotor, in relation to the wind direction, and vice versa, from the retracted positon to the upright position, without a risk of the pivotal displacement itself exposing the tower or the rotor to damaging forces.

The object is obtained by a wind turbine, where a load is mounted to the tower, which load is capable of controlling the pivotal displacement of the tower in relation to the tower support, and where the load is capable of being adjusted so that the load is varied depending on operating parameters at the site of the wind turbine and/or on parameters of the wind turbine.

Controlling and adjusting the pivotal displacement results in the pivotal displacement capable of being performed depending on various parameters of the wind turbine such as a swept area of the rotor of the wind turbine, but also depending on the wind conditions at the site of installation. Wind conditions at the site of installation varies a lot between different sites. Therefore, a wind turbine capable of being controlled and adjusted results in operating parameters of a wind turbine being optimized to the conditions at the site of installation.

According to a preferred embodiment of the invention, the load constitutes an integrate part of the tower, and where the load, in relation to the horizontal pivot axis, is positioned at a second part of the tower,
- the first part of the tower, where the rotor is positioned, extending in a first direction from the horizontal pivot axis and the second part of the tower extending in a second direction from the horizontal pivot axis, the second direction being opposite to the first direction, when viewed along a longitudinal direction of the tower, and
- where the load is a deadweight having a magnitude and being positioned at the second part of the tower so that a torque around the horizontal pivot axis of a gravitational force of the deadweight and the second part of the tower is the same as a torque around the horizontal pivot axis of a gravitational force of the rotor and the first part of the tower.

A load being and integrate part of the wind turbine tower and the torque of the load being biased towards the torque of the rotor, including the tower parts at which the load and the rotor, respectively, is provided, results in the tower easily being pivoted manually during installation and during servicing. Pivoting of the wind turbine manually around the horizontal axis may be performed manually, when for large wind turbines, without a need for machinery for pivoting and without a need for the person having especially high muscular strength for performing the pivotal displacement and without a risk of the person being injured during the pivotal displacement.

According to another possible embodiment of the invention, the horizontal pivot axis is an axle supported in bearings, and where the axle extends perpendicular to a longitudinal extension of the tower,
- where the load constitutes an integrate part of the horizontal pivot axis, and where the load is selected from one or more of the following loads:
- a fit between the axle and the bearings being fixed, and the axle constituting a torsional spring load biasing the pivotal displacement of the tower,
- a fit between the axle and the bearings being adjustable, and the fit constituting a frictional force load biasing the pivotal displacement of the tower,
- a load being exterior to the axle and the bearings and constituting a brake force applied to the axle biasing the pivotal displacement of the tower.

According to preferred embodiment of the invention, the wind turbine has an inner hub around which the rotor rotates, and that the rotor has an outer rim, and with rotor blades between the inner hub and the outer rim,
- where the outer rim has a circumference capable of driving a drive train being in contact with the outer rim, the drive train being one of the following drive trains:
- smooth belt for interaction with a congruent smooth circumference of the outer rim,
- toothed belt for interaction with a congruent toothed circumference of the outer rim,
- chain for interaction with a congruent toothed circumference of the outer rim,
- drive wheel on a rotor shaft of an electrical generator, the drive wheel interacting with the outer circumference of the rim, the drive wheel being smooth or being toothed,
- one or more drive wheels of a gearbox for driving a rotor shaft of an electrical generator, the one or more drive wheels of the gearbox interacting with the outer circumference of the rim, the one or more drive wheel being smooth or being toothed.

The electrical generator being driven along an outer rim of the rotor results in the electrical generator capable of being positioned in other positions than along the centre of the hub. Positioning the electrical generator at other positions provides the possibility of the electrical generator not constituting a mass at a very high position of the wind turbine. The advantage is the pivotal displacement being easier to control and adjust, and possibly also the electrical generator capable of being installed and serviced from the ground.

According to an aspect of the invention, adjustment of the load is capable of being performed during manufacture, alternatively or additionally during installation, of the wind turbine, and before operation of the wind turbine, the load being one of the following types of loads: Mechanical, hydraulic, pneumatic or magnetic.

Adjustment of the load during manufacture may depend on various parameters of the wind turbine itself such as a swept arear of the rotor, the overall dimensions of the tower. Adjustment of the load at the site of installation may additionally depend on the wind conditions at the site of installation such as an possible impulse of wind gusts at te site of installation and/or the average wind speed at the site of installation. Accordingly, the load may be adjusted either only based on parameters of the wind turbine itself or additionally based on parameters at the site of installation.

According to a possible further aspect of the invention, adjustment of the load is capable of also being performed after manufacture and after installation of the wind turbine and capable of being performed during operation of the wind turbine, the load being one of the following types of loads: Mechanical, hydraulic, pneumatic or magnetic.

Adjustment of the load after installation, and during operation, may depend on possible changed wind condition at the site of installation, compared to the wind conditions during installation of the wind turbine. Alternatively, adjustment of the load after installation of the wind turbine may be depend on possible wring adjustment at the time of installation, and changing the adjustment to better suit the wind conditions at the site of installation.

According to an aspect of the invention, adjustment of the load is capable of being performed dependent on the impulse of wind gusts at the site of installation of the wind turbine, where the load has a first magnitude at sites of installation with wind gusts having a large impulse compared to other sites, where the load has a second magnitude at sites of installation with wind gusts having a small impulse compared to other sites, and where the first load magnitude is smaller than the second load magnitude.

Adjustment of the load before and/or after installation an/or during operation, may depend on impulse of wind gusts at the site of installation. Impulse of wind gusts differ from one site of installation to another site of installation. Therefore, adjustment of the load depending on impulse of wind gusts is reducing risk of the wind turbine, at a specific site of installation, not operating properly because of the impulse of wind gust and even reducing risk of the wind turbine being damaged because of the impulse of wind gust.

According to an aspect of the invention, adjustment of the load is capable of being performed dependent on a magnitude of wind force at the site of installation of the wind turbine, where the load has a first magnitude at sites of installation with a relatively large wind force in average compared to other sites, where the load has a second magnitude at sites of installation with a smaller wind force in average compared to other sites, and where the first load magnitude is larger than the second load magnitude.

Adjustment of the load before and/or after installation and/or during operation, may depend on an average and/or a maximum magnitude of wind force at the site of installation. An average and/or a maximum magnitude of wind force differ from one site of installation to another site of installation. Therefore, adjustment of the load depending on an average and/or a maximum magnitude of wind force is reducing risk of the wind turbine, at a specific site of installation, not operating properly because of an average and/or a maximum magnitude of wind force and even reducing risk of the wind turbine being damaged because of an average and/or a maximum magnitude of wind.

According to an aspect of the invention, a gradient of the load is capable of being adjusted dependent on the impulse of wind gusts at the site of installation of the wind turbine, and where the gradient of the load is adjusted to a first gradient at sites of installation with wind gusts having a large impulse compared to other sites, where the gradient of the load is adjusted to a second gradient at sites of installation with wind gusts having a small impulse compared to other sites, and where the first gradient of the load is smaller than the second gradient of the load.

Adjustment of the load before and/or after installation and/or during operation, may depend on impulse of wind gusts at the site of installation. Impulse of wind gusts differ from one site of installation to another site of installation. Therefore, adjustment of the gradient of load depending on impulse of wind gusts is reducing risk of the wind turbine, at a specific site of installation, not operating properly because of the impulse of wind gust and even reducing risk of the wind turbine being damaged because of the impulse of wind gust. Adjustment of the gradient of the load may have the advantage, that the wind turbine may pivot around the horizontal axis in a progressive manner. As example, the load may be smaller during an initial pivoting of the tower, and the load may be greater during a final pivoting of the tower. Thereby, the tower will pivot faster, due to a sudden wind gust, during an initial pivoting than during a final pivoting.

According to an aspect of the invention,
- adjustment of the load is capable of being performed differently depending on, whether the pivotal displacement of the tower is from the upright position of the rotor to the lie-down position of the rotor, or the pivotal displacement of the tower is from the lie-down position of the rotor to the upright position of the rotor,
- where the load and/or the gradient of the load is relatively small, when at least part of the pivotal displacement of the tower being from the upright position of the rotor to the lie-down position of the rotor, and
- where the load and/or the gradient of the load is relatively larger, when at least part of the pivotal displacement of the tower is from the lie-down position of the rotor to the upright position of the rotor.

A wind turbine according to any of the preceding claims, where the pivotal displacement of the tower in relation to the tower support is capable of being obstructed voluntarily, and where the tower, when being pivoted to the lie-down position in relation to the tower support, is capable of being maintained in the lie-down position, biased towards a force of the load.

Obstructing the pivotal displacement may be performed either when the wind turbine is in the fully upright position, when the wind turbine is in the fully lie-down position or at any position in-between the fully upright positon or the fully lie-down position. If obstructing the pivotal displacement is when the wind turbine is in the fully upright position, the tower will not pivot during sudden wind gusts or if the wind speed increases. This is an advantage, if the wind speed often varies, but within only a limited range from minimum to maximum wind speeds. If obstructing the pivotal displacement is when the wind turbine is when the tower is in the fully lie-down position the tower is not capable of pivoting towards the upright position. This is an advantage during installation and during servicing or replacement of the rotor or other parts at the top of the tower.

According to an aspect of the invention, the pivotal displacement of the tower in relation to the tower support is capable of being performed manually, an where the pivotal displacement, also when being performed manually, is capable of being performed within the range between the upright position of the rotor and the lie-down position of the rotor in relation to the direction of the wind force.

Manually performing the pivotal displacement may be performed when the rotor or other parts at the top of the tower is to be serviced or replaced. One or more persons manually pivoting the tower from an upright position to the lie-down position eliminates a need for any machinery in performing the pivoting displacement.

According to an aspect of the invention, the rotor in the range between the upright position of the rotor and the lie-down position of the rotor, in relation to a direction of the wind force, is positioned downwind from the horizontal pivot axis, when viewed in relation to a vertical plane perpendicular to the direction of the wind force, so that when the tower displaces between the upright position of the rotor and the lie-down position of the rotor, a swept area that the rotor sweeps during rotation, is decreased from one swept area to a relatively smaller swept area.

The rotor being positioned downwind of the horizontal axis reduces a risk of the tower pivoting from the upright position and opposite to the direction towards the lie-down position. Sudden wind gusts combined with sudden major change of wind direction, as example during thunder storms, may expose the rotor to wind conditions, which may be difficult for the rotor to adapt to within a very short period of time. In such conditions, the rotor being positioned downwind of the horizontal axis is more safe than the rotor being positioned upwind of the horizontal axis.

The invention also relates to a tower for a wind turbine according to the invention, the tower comprising a tower support, and the tower capable of being pivotal displacement in relation to the tower support around a horizontal pivot axis, where the wind turbine comprises
- a rotor mounted at one end of the tower, the rotor capable of being rotation in relation to the tower around a rotor hub during exposure to the rotor of the wind force,
- the pivotal displacement of the tower being in a range between an upright position of the rotor and a lie-down position of the rotor, in relation to a direction of the wind force,
- a load mounted between the tower and the tower support, the load capable of being controlling the pivotal displacement between the tower and the tower support, and
- the load being adjustable so that the load is capable of being varied depending on operating parameters at the site of the wind turbine and/or of the wind turbine itself.

The invention also relates to a method of installing and operating a wind turbine according to the invention, the method comprising the following steps:
- providing a tower support at a site of installation, the tower support being external to the wind turbine or the tower support being an integrate part of the wind turbine,
- installing the wind turbine at the site of installation by supporting the tower at the tower support via the horizontal pivot axis, and providing the load to the wind turbine,
- adjusting the load dependent on impulse of wind gusts at the site of installation of the wind turbine and/or on an average magnitude of wind force at the site of installation,
- and/or adjusting the load dependent on one or more selected parameters of the wind turbine, and/or dependent on an altitude above sea level at the site of installation.

### Brief description of embodiments of the invention

Fig. 1 is a photograph showing a tower and a rotor of an embodiment of a wind turbine according to the invention,
Fig. 2 is a photograph showing part of a tower support, part of the tower and one possible load of the wind turbine,
Fig. 3 is a photograph showing part of a tower support, part of the tower and another possible load of the wind turbine,
Fig. 4 is a photograph showing the other possible load of the wind turbine and elements for controlling and adjusting the load.

### Detailed description of embodiments of the invention

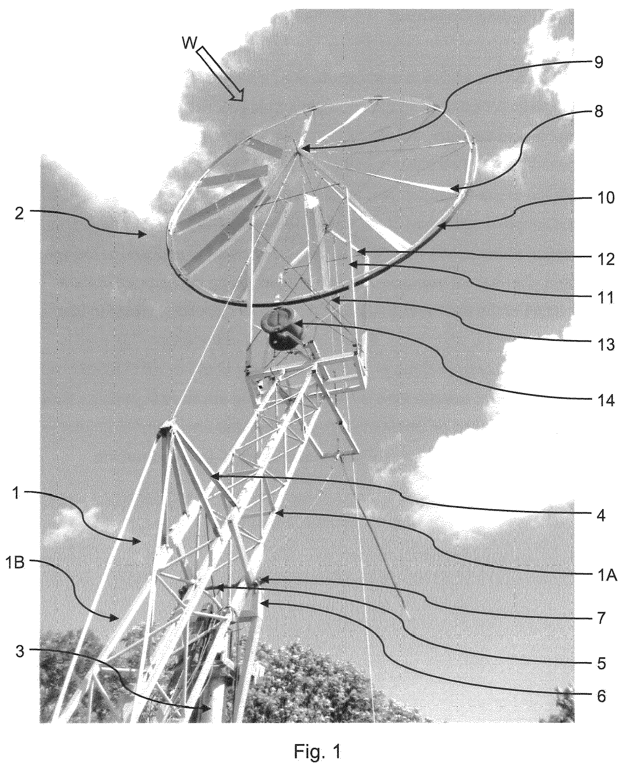

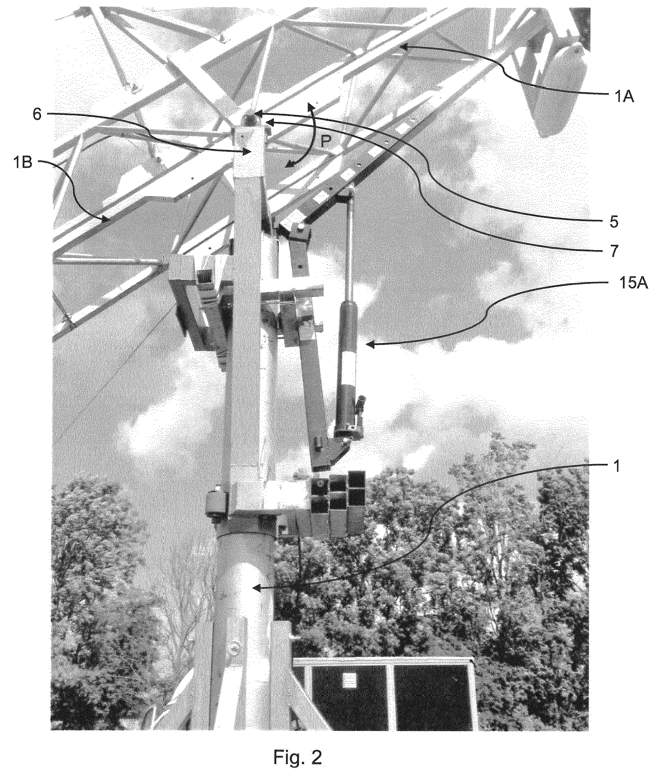

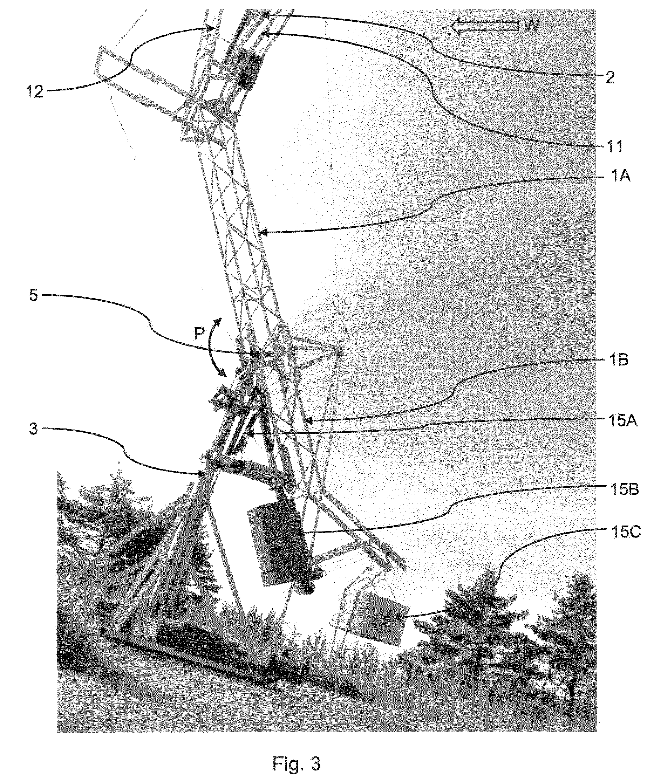

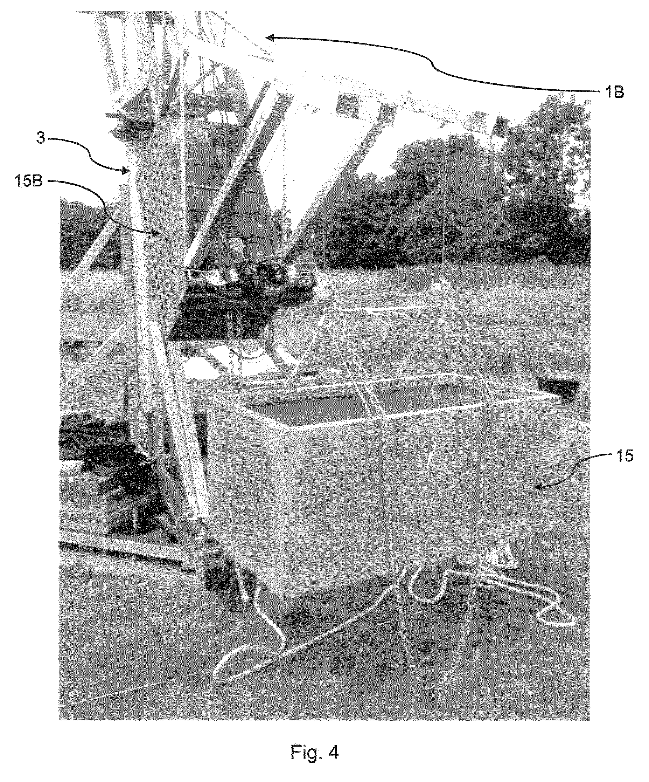

Fig. 1 shows an embodiment of a wind turbine with a tower 1, a rotor 2 and a deadweight (see Fig. 3 and Fig. 4) as load of the wind turbine. The wind turbine also comprises a tower support 3 (see also Fig. 2, Fig. 3 and Fig. 4).

### TOWER

The tower has various structural tower elements 4 such as frames, wires and rods (not individually designated) for increasing the structural integrity of the tower. The tower 1 is capable of pivoting around a horizontal axis 5 provided between a top 6 of the tower support and the tower 1. The horizontal axis 5 is a steel axle constituting an integrate part of the tower 1, and bearings 7 constituting an integrate part of the top 6 of the tower support 3.

The tower 1 has a first part 1A extending from the horizontal axis 5 and upwards from the horizontal axis 5. At a distant end of the first part 1A of the tower 1, the rotor 2 is positioned. The tower 1 also has a second part 1B, extending from the horizontal axis 5 and downwards from the horizontal axis 5, opposite to the first part 1A of the tower 1 in relation to the horizontal axis 5. At a distant end of the second part 1 B of the tower 1, a deadweight is positioned (see Fig. 3 and Fig. 4).

The tower is intended for pivoting between a fully upright position (see Fig. 1) and a fully lie-down position (not shown). The tower is capable of pivoting to any positon between the fully upright position and the fully lie-down position. In the fully upright position, the rotor is exposed as much as possible to the wind. In the fully lie-down position, the rotor is exposed as little as possible to the wind. Also, in the fully lie-down position, the rotor is accessible form the ground, thereby enabling personnel to install elements at the top of the tower, without having to climb the tower and without having to use a crane.

Depending on a size and weight of the wind turbine, and depending on the load distribution (see further below), personnel is preferably capable of manually pivoting the tower from the fully upright position to the fully lie-down position, when elements at the top of the tower are to be installed, are to be serviced or are to be removed.

### ROTOR

In the embodiment shown, the rotor 2 is constituted by a plurality of blades 8 positioned between an inner hub 9 and an outer rim 10. The inner hub 9 constitutes the rotational axis of the rotor 2. The inner hub 9 is supported at a front of the rotor 2 and at a rear of the rotor 2, when seen in a wind direction W during operation of the wind turbine. At the front of the rotor 2 and at the rear of the rotor 2, the inner hub 9 is supported by a front frame 11 and a rear frame 12, respectively. The front frame 11 and the rear frame 12 constitute a top of the tower 1. The front frame 11 and the rear frame 12 extends in front of and behind, respectively, a swept area of the rotor 2. Preferably, excessive wind noise is limited by the front frame 11 and/or the rear frame 12 extending non-parallel to the cross-section of the swept area of the rotor 2. Interference of wind between the rotor 2 and the front frame 11 and/or the rear frame 12 is thereby limited, thus limiting wind noise during rotation of the rotor 2.

In the embodiment shown, the rotor 2 is constituted by a number of blades 8 positioned between the inner hub 9 and an outer rim 10. In the embodiment shown, the wind turbine is a multi-blade wind turbine with twelve blades 8. A larger or smaller number of blades may be provided. In the embodiment shown, the outer rim 10 is encircling tips of the blades 8. The tips of the blades 8 may extend beyond the outer rim 10. In the embodiment shown, the wind turbine is a horizontal axis wind turbine (HAWT), when the wind turbine is in a fully upright position. In the alternative, the wind turbine may be a vertical axis wind turbine (VAWT), when the wind turbine is in a fully upright position.

Horizontal axis wind turbine and vertical axis wind turbine does not exclude a direction of the rotor axis deviating somewhat, perhaps up to ten degrees, from a horizontal or a vertical direction, respectively. Also, the direction of the rotor axis will change, when the wind turbine pivots from the upright position towards the lie-down position, and vice versa.

### TOWER SUPPORT

In the embodiment shown (see also Fig. 3 and Fig. 4), the tower support 3 constitutes part of the wind turbine. The tower support 3 rests on the ground and is secured to the ground by weights maintaining the tower support at rest at the ground. Alternatively, the tower support 4 may be secured to the ground by pegs being dug or driven into the ground. Even in the alternative, a casted foundation may be provided in the ground and the tower support 3 being secured to the casted foundation by bolts extending from the cast foundation or by pegs of the tower support 3 being cast into the foundation.

### DRIVE

In the embodiment shown, the outer rim 10 of the rotor 2 drives a belt 13 . The belt 13 extends along most of the circumference of the outer rim 10 and to a drive wheel (not shown) of an electric generator 14. In the embodiment shown, the electric generator 14 is positioned just underneath the rotor 2, in order for the distance between the outer rim 10 of the rotor 2 and the drive wheel (not shown) of the electric generator 14 being as short as possible.

In an alternative embodiment, the electric generator 14 may be positioned further below the rotor 2, possibly being positioned on the tower support 3. Thereby, the mass at the top of the tower 1 is limited. Also, if the electric generator 14 is positioned further below the rotor 2, the electric generator 14 may be serviced during operation of the wind turbine, without having to stop the rotor 2 and without having to pivot the tower 1 to the lie-down position.

In an alternative embodiment, where the electric generator 14 is not positioned just underneath the rotor 2, the belt 13 is longer and, depending on where the electric generator 14 is positioned, may be guided along pulleys between the rotor 2 and the electric generator 14, along an extension from the outer rim 10 of the rotor 2 to the drive wheel of the electric generator 14.

In another alternative embodiment, the outer rim 10 drives a drive wheel of the electric generator 14 directly, without a belt as drive. In such embodiment, the electric generator 14 is positioned just underneath the rotor 2, or at another position in immediate vicinity of the outer rim 10. Thereby, the drive wheel of the electric generator 14 is capable of interacting with the circumference of the outer rim 10.

In the embodiment shown, the drive is a belt with a smooth belt. Other types of drives are possible. The drive may be a toothed drive belt, the drive may be a V-shaped drive belt, or the drive may be a chain or other type of endless drive passing partly around the circumference of the outer rim 10 and partly around a drive wheel of the electric generator 14.

The drive may comprise a gearbox provided between the outer rim 10 and the electric generator 14. If the drive comprises a gearbox, in input axle of the gearbox may be driven directly by the outer rim 10 or may be driven by a belt or other endless drive passing around the circumference of the outer rim 10 and around the a drive wheel of an input shaft of the gearbox. The advantage of the drive being between the outer rim 10 and the electric generator 14, instead of between the inner hub 9 and the generator, is that the drive and the electric generator 14 is not positioned high in the tower 1, in line with the inner hub 9, but is positioned at other positons on the tower 1 or on the tower support or even on the ground, thereby reducing the overall mass high in the tower 1.

### LOAD

The load is intended for and capable of counteracting the pivotal displacement of the tower 1 from the upright position towards the lie-down position, and to assist in the pivotal movement of the tower 1 from the lie-down position towards the upright position.

Fig. 2 shows a first possible embodiment of a load. The is a hydraulic cylinder 15A or a pneumatic cylinder, with one end of the cylinder, either the cylinder head or, as shown, the piston rod, mounted to the tower 1, and with an opposite end of the cylinder, either the piston rod or the cylinder head, respectively, mounted to the tower 1 or the tower support. The damping force of the piston, outwards or inwards, in the cylinder, due to hydraulic fluid or pneumatic fluid flow in the cylinder, constitutes the load. The load 15A may be adjusted in different ways. A first way to adjust the load is to adjust the hydraulic or pneumatic pressure inside the cylinder. A second way to adjust the load is to adjust the point on the tower 1, where the piston rod is mounted to the tower 1. A third way to adjust the load is to replace one hydraulic cylinder or pneumatic cylinder with another hydraulic cylinder or pneumatic cylinder having another damping force than the one cylinder.

Fig. 3 and Fig. 4 show another possible embodiment of a load, where the load is a deadweight positioned at a distant end of the second part 1 B of the tower 1. The gravitational force of the deadweight constitutes the load. The load consists of a fixed load 15B, but yet adjustable, to be adjusted before installation at the site of installation, and a variable, adjustable load 15C to be adjusted during installation at the site of installation, and possible during operation of the wind turbine. The fixed load may be provided at the site of installation, but the adjustment is performed in advance.

The fixed load 15B is adjusted depending on parameters of the wind turbine itself, such as the mass distribution between the first part 1A of the tower together with the rotor and the second part 1B of the tower 1 together with the fixed load. In the embodiment shown, the fixed load is a basket with stones, such as box-shaped courtyard stones.

The variable load 15C comprises a container suspended in wires. Stones, sand, water or any other weight may be put into the container for increasing the overall load, that is, the sum of the fixed load and the variable load. Adjusting the overall load by adjusting the variable load may be performed because of change of wind conditions at the site of installation. Adjusting the overall load by adjusting the variable load may also be performed because of the wind turbine being moved from one location to another location, the other location having other wind conditions than the previous location.

Fig. 3 shows a combination of the first embodiment of a load, that is the hydraulic or pneumatic cylinder 15A, and the deadweight fixed load 15B and variable load 15C.

The load may be other types of loads than a hydraulic or pneumatic cylinder or a deadweight. The load may be applied as a load external to the tower and the horizontal axis and the load may be provided at any position between the tower support and the tower or possibly between the tower and the ground or a cast foundation.

The load may be a brake, possibly a disk brake with a disk being an integrate part of the horizontal axle, or a drum brake with a drum being an integrate part of the horizontal axle, or as a belt brake with a belt around the horizontal axle, and where a brake force limits pivotal movement from the upright position towards the lie-down position. The brake force may be adjusted depending on wind conditions. The brake force is increased during relatively light wind conditions, the tower thereby pivoting from the upright position towards the lie-down position relatively easily. The brake force is decreased during relatively strong wind conditions, the tower thereby pivoting from the upright position towards the lie-down position relatively less easily.

In an alternative embodiment, the load may a mechanical spring. A mechanical spring may a helical spring or a spiral spring, designed for providing a load either during compression or during extension. A helical mechanical spring may have one end of the spring mounted to the tower support and another end of the spring mounted to the tower 1. A spiral spring may have one end mounted to the tower support and another end mounted to the horizontal axle. The mechanical spring may be adjusted by winding the helical spring or the spiral spring more or less, thereby adjusting the spring stiffness, depending on the wind conditions at the site of installation and/or depending on any selected parameter, such as dimensions and weight, of the wind turbine itself.

The mechanical spring may be the horizontal axle itself, either the horizontal axle itself being a solid axle constituting a torsional mechanical spring or the horizontal axle itself being a helical spring, also constituting a torsional mechanical spring. The mechanical spring may be adjusted by selecting the cross-sectional area of the solid axle or by selecting the size and or length of the torsional mechanical spring, thereby adjusting the spring stiffness, depending on the wind conditions at the site of installation and/or on any selected parameter, such as dimensions and weight, of the wind turbine itself.

### LOAD DISTRIBUTION

In a preferred embodiment, a mass of the first part 1A of the tower 1 and of the rotor 2 is the same, or at least close to being the same, as a mass of the second part 1 B of the tower 1 and the deadweight. Thereby, the torque of the first part 1A of the tower 1 together with the rotor 2 on the horizontal axle is the same, or close to being the same, as the torque of the second part 1 B of the tower 1 and the deadweight.

In one alternative embodiment, the mass of the first part 1A of the tower 1 and of the rotor 2 is larger than a mass of the second part 1 B of the tower 1 and the deadweight. Thereby, the torque of the first part 1A of the tower 1 together with the rotor 2 on the horizontal axle is larger than the torque of the second part 1B of the tower 1 and the deadweight. In this embodiment, the tower 1 is biased towards the wind turbine being in an advanced, upright position, in conditions where the rotor 2 is not exposed to wind.

In another alternative embodiment, the mass of the first part 1A of the tower 1 and of the rotor 2 is smaller than a mass of the second part 1 B of the tower 1 and the deadweight. Thereby, the torque of the first part 1A of the tower 1 together with the rotor 2 on the horizontal axle is smaller than the torque of the second part 1 B of the tower 1 and the deadweight. In this embodiment, the tower 1 is biased towards the wind turbine being in a retracted, lie-down position, in conditions where the rotor 2 is not exposed to wind.

The container constituting part of the variable load 15B may have a safety mechanism, which is actuated in case the wind turbine must be pivoted fast towards the lie-down position.

As example, if the drive is released from the outer rim and/or from the drive wheel of the electrical generator or a drive wheel of an input shaft of a gearbox, the electrical generator is not providing any resistance to the rotational speed of the rotor. Then the rotational speed of the rotor may increase rapidly, and the rotor may 'run loose' and possibly be damaged.

Another example may be if an electrical load, which the electrical generator is powering, is cut off from the electrical generator, the rotational speed of the rotor may also increase rapidly, and the rotor may also 'run loose' and possibly be damaged. In such circumstances, a possible solution is to pivot the tower towards the lie-down position as fast as possible. This may be obtained by expelling part or all of the variable load.

If, as example, the variable load is water, a valve in the container may be opened, and part or all water in the container be expelled. If, as another example, the variable load is sand or stones, a bottom of the container may be opened, and part of or all of the sand or stones will be expelled from the container. The tower will then pivot fast towards the lie-down position.

The wind turbine, during operation, functions in the following manner: The wind turbine is positioned in the upright position, so that the rotor 2 is positioned at the top of the wind turbine. The rotor 2 is exposed to the wind, and the wind rotates the rotor 2. The tower 1 pivots more or less towards the lie-down position, depending on the wind speed. The higher the wind speed, the more the tower 1 pivots towards the lie-down position.

Wind conditions, where the wind is exposing the rotor 2 evenly, the tower 1 pivots depending on the average wind speed. In such even wind conditions, the tower 1 will pivot to a certain angular position and will stay more or less in the same angular position during operation of the wind turbine.

Wind conditions, where the wind is exposing the rotor 2 to wind gusts, the tower 1 pivots depending on the average wind speed and depending on the impulse of the wind gusts. In such uneven wind conditions, the tower 1 will pivot to a certain angular position and pivots further towards the lie-down position, when wind gusts occur, and pivots towards the upright position, when the wind gusts ends. Accordingly, the first part 1A of the tower 1 with the rotor 2 pivots down and up again, respectively, when wind gusts occur and ends.

The rotor 2, when rotating during exposure to the wind, is covering what is called a swept area. The swept area is the cross-sectional ear of the rotor 2 multiplied by cosine to the angle between the wind direction W and a normal to the cross-sectional area of the rotor 2. If and when the angle between the wind direction W and a normal to the cross-sectional area of the rotor 2 is zero, the swept area is the largest possible.

When the angle between the wind direction W and a normal to the cross-sectional area of the rotor 2 increases, the swept area decreases. When the swept area decreases, the torque of the wind force to the rotor 2 is decreased, and the rotor 2 will rotate slower than when the swept area is the largest, all other parameters like the wind speed and wind gust impulse being equal.

### LIST OF REFERENCES

- 1 -: Tower
- 1A -: First part of tower
- 1B -: Second part of tower
- 2 -: Rotor
- 3 -: Tower support
- 4 -: Structural tower element
- 5 -: Horizontal axis
- 6 -: Top of tower support
- 7 -: Bearing
- 8 -: Blades
- 9 -: Inner hub
- 10 -: Outer rim
- 11 -: Front frame
- 12 -: Rear frame
- 13 -: Belt drive
- 14 -: Electric generator
- 15A -: Hydraulic cylinder
- 15B -: Fixed load
- 15C -: Variable load

## Claims

1. A wind turbine with a rotor for driving an electrical generator for generating electrical power in response to a wind force exposed to the rotor, the wind turbine comprising:
- a tower mounted to a tower support, the tower capable of performing a pivotal displacement, in relation to the tower support, around a horizontal pivot axis,
- the rotor being positioned at a first part of the tower, the rotor capable of rotation, in relation to the tower, around a hub, when the rotor is exposed to the wind force,
- the pivotal displacement of the tower being between an upright position of the rotor and a lie-down position of the rotor, in relation to a direction of the wind force,
- a load mounted to the tower, which load is capable of controlling the pivotal displacement of the tower in relation to the tower support, and
- the load capable of being adjusted so that the load is varied depending on operating parameters at the site of the wind turbine and/or on parameters of the wind turbine.

2. A wind turbine according to claim 1,
- where the load constitutes an integrate part of the tower, and where the load, in relation to the horizontal pivot axis, is positioned at a second part of the tower,
- the first part of the tower, where the rotor is positioned, extending in a first direction from the horizontal pivot axis and the second part of the tower extending in a second direction from the horizontal pivot axis, the second direction being opposite to the first direction, when viewed along a longitudinal direction of the tower, and
- where the load is a deadweight having a magnitude and being positioned at the second part of the tower so that a torque around the horizontal pivot axis of a gravitational force of the deadweight and the second part of the tower is the same as a torque around the horizontal pivot axis of a gravitational force of the rotor and the first part of the tower.

3. A wind turbine according to claim 1,
- where the horizontal pivot axis is an axle supported in bearings, and where the axle extends perpendicular to a longitudinal extension of the tower,
- where the load constitutes an integrate part of the horizontal pivot axis, and where the load is selected from one or more of the following loads:
- a fit between the axle and the bearings being fixed, and the axle constituting a torsional spring load biasing the pivotal displacement of the tower,
- a fit between the axle and the bearings being adjustable, and the fit constituting a frictional force load biasing the pivotal displacement of the tower,
- a load being exterior to the axle and the bearings and constituting a brake force applied to the axle biasing the pivotal displacement of the tower.

4. A wind turbine according to any of the preceding claims,
- where the wind turbine has an inner hub around which the rotor rotates, and that the rotor has an outer rim, and with rotor blades between the inner hub and the outer rim,
- where the outer rim has a circumference capable of driving a drive train being in contact with the outer rim, the drive train being one of the following drive trains:
- smooth belt for interaction with a congruent smooth circumference of the outer rim,
- toothed belt for interaction with a congruent toothed circumference of the outer rim,
- chain for interaction with a congruent toothed circumference of the outer rim,
- drive wheel on a rotor shaft of an electrical generator, the drive wheel interacting with the outer circumference of the rim, the drive wheel being smooth or being toothed,
- one or more drive wheels of a gearbox for driving a rotor shaft of an electrical generator, the one or more drive wheels of the gearbox interacting with the outer circumference of the rim, the one or more drive wheel being smooth or being toothed.

5. A wind turbine according to any of the preceding claims, where adjustment of the load is capable of being performed during manufacture, alternatively or additionally during installation, of the wind turbine, and before operation of the wind turbine, the load being one of the following types of loads: Mechanical, hydraulic, pneumatic or magnetic.

6. A wind turbine according to claim 5, where adjustment of the load is capable of also being performed after manufacture and after installation of the wind turbine and capable of being performed during operation of the wind turbine, the load being one of the following types of loads: Mechanical, hydraulic, pneumatic or magnetic.

7. A wind turbine according to any of the preceding claims, where adjustment of the load is capable of being performed dependent on the impulse of wind gusts at the site of installation of the wind turbine, where the load has a first magnitude at sites of installation with wind gusts having a large impulse compared to other sites, where the load has a second magnitude at sites of installation with wind gusts having a small impulse compared to other sites, and where the first load magnitude is smaller than the second load magnitude.

8. A wind turbine according to any of the preceding claims, where adjustment of the load is capable of being performed dependent on a magnitude of wind force at the site of installation of the wind turbine, where the load has a first magnitude at sites of installation with a relatively large wind force in average compared to other sites, where the load has a second magnitude at sites of installation with a smaller wind force in average compared to other sites, and where the first load magnitude is larger than the second load magnitude.

9. A wind turbine according to any of the preceding claims, where a gradient of the load is capable of being adjusted dependent on the impulse of wind gusts at the site of installation of the wind turbine, and where the gradient of the load is adjusted to a first gradient at sites of installation with wind gusts having a large impulse compared to other sites, where the gradient of the load is adjusted to a second gradient at sites of installation with wind gusts having a small impulse compared to other sites, and where the first gradient of the load is smaller than the second gradient of the load.

10. A wind turbine according to any of the preceding claims,
- where the load is capable of being adjusted differently depending on, whether the pivotal displacement of the tower is from the upright position of the rotor to the lie-down position of the rotor, or the pivotal displacement of the tower is from the lie-down position of the rotor to the upright position of the rotor,
- where the load and/or the gradient of the load is relatively small, when at least part of the pivotal displacement of the tower being from the upright position of the rotor to the lie-down position of the rotor, and
- where the load and/or the gradient of the load is relatively larger, when at least part of the pivotal displacement of the tower is from the lie-down position of the rotor to the upright position of the rotor.

11. A wind turbine according to any of the preceding claims, where the pivotal displacement of the tower in relation to the tower support is capable of being obstructed voluntarily, and where the tower, when being pivoted to the lie-down position in relation to the tower support, is capable of being maintained in the lie-down position, biased towards a force of the load.

12. A wind turbine according to claim any of the preceding claims, where the pivotal displacement of the tower in relation to the tower support is capable of being performed manually, an where the pivotal displacement, also when being performed manually, is capable of being performed within the range between the upright position of the rotor and the lie-down position of the rotor in relation to the direction of the wind force.

13. A wind turbine according to any of the preceding claims, where the rotor in the range between the upright position of the rotor and the lie-down position of the rotor, in relation to a direction of the wind force, is positioned downwind from the horizontal pivot axis, when viewed in relation to a vertical plane perpendicular to the direction of the wind force, so that when the tower displaces between the upright position of the rotor and the lie-down position of the rotor, a swept area that the rotor sweeps during rotation, is decreased from one swept area to a relatively smaller swept area.

14. A tower for a wind turbine according to any of claim 1-13, the tower comprising a tower support, and the tower capable of pivotal displacement in relation to the tower support around a horizontal pivot axis, where the wind turbine comprises
- a rotor mounted at one end of the tower, the rotor capable of being rotation in relation to the tower around a rotor hub during exposure to the rotor of the wind force,
- the pivotal displacement of the tower being in a range between an upright position of the rotor and a lie-down position of the rotor, in relation to a direction of the wind force,
- a load mounted between the tower and the tower support, the load capable of being controlling the pivotal displacement between the tower and the tower support, and
- the load being adjustable so that the load is capable of being varied depending on operating parameters at the site of the wind turbine and/or of the wind turbine itself.

15. Method of installing and operating a wind turbine according to any of claims 1-13, the method comprising the following steps:
- providing a tower support at a site of installation, the tower support being external to the wind turbine or the tower support being an integrate part of the wind turbine,
- installing the wind turbine at the site of installation by supporting the tower at the tower support via the horizontal pivot axis, and providing the load to the wind turbine,
- adjusting the load dependent on impulse of wind gusts at the site of installation of the wind turbine and/or on an average magnitude of wind force at the site of installation,
- and/or adjusting the load dependent on one or more selected parameters of the wind turbine, and/or dependent on an altitude above sea level at the site of installation.
